# EUROPEAN PATENT SPECIFICATION

(11) **EP 3 477 977 B1**
(45) Date of publication and mention of the grant of the patent: **11.12.2019**
(21) Application number: 17198720.9
(22) Date of filing: 26.10.2017
(51) Int. Cl.: H04W 8/18, H04W 8/22, H04W 12/02, H04L 29/12, H04W 76/10, H04L 29/06

(54) **TECHNIQUES FOR MOBILE PAIRING**
TECHNIKEN ZUR MOBILEN PAARUNG
TECHNIQUES D'APPARIEMENT MOBILE

(43) Date of publication of application: 01.05.2019
(73) Proprietor: Deutsche Telekom AG, 53113 Bonn (DE)
(72) Inventor: HENZE, Thomas, 53173 Bonn (DE); MEILING, Axel, 82024 Taufkirchen (DE); SIEBENWEIBER, Daniel, 80337 München (DE)
(74) Representative: Nern, Peter-Michael

(56) References cited:
- US-A1- 2012 039 312
- US-A1- 2015 350 899
- "3rd Generation Partnership Project; Technical Specification Group Core Network and Terminals; IP Multimedia (IM) Subsystem Sh interface; Signalling flows and message contents (Release 15)", 3GPP STANDARD ; TECHNICAL SPECIFICATION ; 3GPP TS 29.328, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 19 June 2017 (2017-06-19), pages 1-77, XP051298825, [retrieved on 2017-06-19]

## Description

### TECHNICAL FIELD

The invention relates to techniques for pairing of applications with mobile devices. In particular, the invention relates to a method for connecting or pairing an application with a mobile device, a network registry for registering such mobile devices with users, an application for connecting or pairing with a mobile device, a communication system including such mobile devices and applications and a mobile pairing system with such mobile paring service.

### BACKGROUND

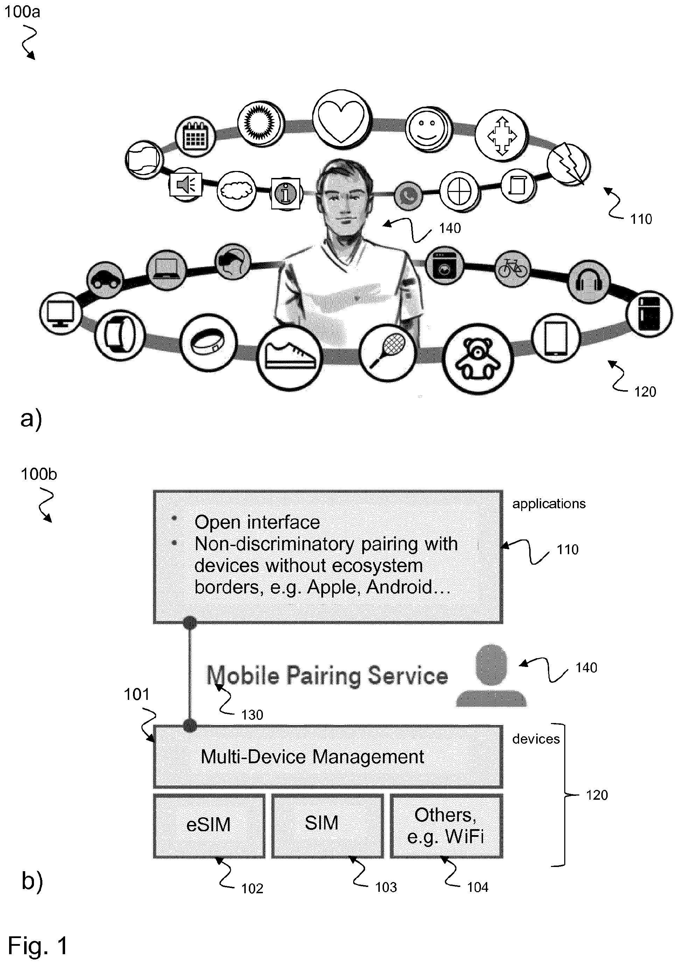

Clients 140 will use more and more (mobile) connected devices 120 in the future, not only smart phones and tablets but also smart watches, smart gadgets, smart equipment and clothing etc. as shown in Fig. 1a. These devices 120 are not necessarily part of a local network (LAN, WLAN) or connected to a central managing device (Smartphone via NFC or Bluetooth). These devices will initially only be connected via the mobile network (Wide Area Network, WAN). Any new device of a given customer or client or user 140 cannot automatically be paired to his used applications 110 if the device is only connected to the mobile network (WAN). The device 120 does not automatically know the customer's 140 used application 110. The application 110 does not automatically know the customer's 140 device 120.

Every application 110 must be manually paired to each device 120 and thereby use a suitable mechanism respectively. Customer's devices are automatically paired today only if one of the following requirements are given: Device-centered: A primary device (e.g. smartphone) is paired (e.g. via Bluetooth, NFC) to multiple devices (e.g. running shoe, bike). An application on the primary device connects the devices so they can send data to the application (e.g. health app). Local network: Hardware or software elements within the devices register in a local network (e.g. WLAN, LAN, Zigbee). Applications can find devices in this locally limited network and can connect. Example: Apple Home Kit or DLNA (Digital Living Network Alliance).

If the above mentioned automatical pairing is not applicable customers need to manually pair their devices one by one to applications they use via two different options: Functionality to connect a device to an application: e.g. via entering IP address of the device in the application, scanning a QR (Quick Response) code on the device with the application. Functionality to connect an application to device: By entering application login credentials on the device, e.g. via OAUTH (Open Authentication), or downloading the app to the device.

In current pairing systems, the device and application has to be either connected to a centered managing device (e.g. Smartphone via Bluetooth, NFC) or part of a local network (e.g. LAN, WLAN, Zigbee). There is no automated mechanism available if the device is only connected to a global network (WAN). In the latter case, it increases the complexity for customers and OEMs/application providers: Customers need to manually pair their devices one by one to applications. In case of n devices and m application, this implies the high number of n*m pairing procedures. All OEMs and all applications need to come to agreements about a suitable mechanism of pairing device and application.

Today, pairing between devices and application does only work device-centered, i.e. interoperability of devices with primary device is needed, proximity to the primary device is needed; and in a local network with its spatial limits and needs for proximity to the network.

Document 3GPP TS 29.328, describes functional requirements of the application server (AS) for communication with the HSS over the Sh interface (see section 5.1.1). The AS can subscribe to receive notifications from the HSS of changes in data (see section 5.2).

Document US 2012/0039312 A1 describes an enhanced Session Initiation Protocol ("SIP") registration message having extended header information that is used by an Internet Protocol Multimedia Subsystem ("IMS") core to determine the registration status of a mobile device and the physical location of the mobile device.

Document US 2015/0350899 A1 describes VoIP authentication in 4G VoLTE and also provides an extra authentication method of VoLTE for achieving communication security.

### SUMMARY OF THE INVENTION

It is an object of the invention to provide a solution for a more flexible pairing service that overcomes the limitations described above.

In particular, it is an object of the invention to provide a pairing concept with global functionality, i.e. no limitation of "usage area" where the pairing can occur; universal functionality, i.e. no limitation to specific devices/applications/eco-systems; and simultaneous pairing of multiple devices with applications.

The foregoing and other objects are achieved by the subject matter of the independent claims. Further implementation forms are apparent from the dependent claims, the description and the figures.

In such a mobile pairing service (MPS) as described hereinafter, there is no need for proximity to primary device for pairing or a local WiFi network for interconnecting, interoperability of vendor-specific services with vendor-specific devices is achieved and simultaneous pairing of multiple devices with applications is enabled.

The Mobile Pairing Service (MPS) as described in this disclosure links information about customer's 140 devices 120 with applications 110 chosen by that customer 140 across networks. This new pairing method leverages the capabilities of multiple connected devices for innovative new services and increases customer satisfaction and it reduces complexity for OEMs/application providers. MPS maintains a neutral mediator position by enabling any application 110 to connect to customer's 140 devices 120 via standardized interfaces. This fosters fair competition and "democratization" in the application market. MPS treats all players equally, works instantly and everywhere and MPS is secure. Advantages of MPS are: Simplified implementation: There is no need for any additional technology such as Bluetooth to connect a device 120 with an application 110; Increased efficiency: Automatic and simultaneous pairing of multiple devices 120 to an application 110 instead of high number of (m*n) pairing procedures.

According to a first aspect the invention relates to a method for connecting, in particular pairing, an application with at least one mobile device, the method comprising: transmitting, by the application, a request for device information to a network registry, wherein the request for device information comprises user identification information, in particular a unique reference of the user to an agreement with an operator of the network registry; retrieving, by the network registry, device information of the at least one mobile device based on the user identification information, wherein the network registry comprises a register that allocates mobile devices to users based on device identification information and user identification information; transmitting, by the network registry, the device information of the at least one mobile device to the application; and connecting, in particular, pairing, by the application or the at least one mobile device, the application with the at least one mobile device by using the device information of the at least one mobile device.

Such a pairing method provides a solution for a flexible pairing service that overcomes the limitations described above. The pairing method implements a pairing with global functionality, i.e. no limitation of "usage area" where the pairing can occur; universal functionality, i.e. no limitation to specific devices/applications/eco-systems; and simultaneous pairing of multiple devices with applications. In particular, when using the pairing method according to the first aspect of the invention, there is no need for proximity to a primary device for pairing or for a local WiFi network for interconnection. Vendor-specific services can interoperate with vendor-specific devices and simultaneous pairing of multiple devices with one or more applications can be achieved.

In an exemplary implementation form, the method comprises: receiving, by the network registry, the device information of the at least one mobile device from the at least one mobile device, before transmitting the device information to the application.

This provides the advantage that the device information is valid when being transmitted to the application.

In an exemplary implementation form, the method comprises: receiving, by the network registry, the device information of the at least one mobile device upon activation of the at least one mobile device, in particular upon download of an eSIM profile to the at least one mobile device in accordance with a GSMA standard.

This provides the advantage that the device information of a new device is stored in the network registry just after activation of the mobile device. Hence the registry stores all necessary device information of all activated devices related to a particular customer.

In an exemplary implementation form, the method comprises: receiving, by the network registry, the device information of the at least one mobile device together with identification information of the at least one mobile subscriber, in particular a Mobile Subscriber ISDN Number (MSISDN); and registering, by the network registry, the device information of the at least one mobile device in the register of the network registry based on the identification information of the at least one mobile subscriber.

This provides the advantage that the register entries of devices in the network registry can be easily retrieved as the device information is associated with identification information of the device. When knowing the identification of the device, the device information can be quickly retrieved.

In an exemplary implementation form of the method, the device information of the at least one mobile device comprises at least one of the following: International Mobile Equipment Identity (IMEI), device capabilities, IP address, eUICC ID, additional identifiers.

This provides the advantage that a variety of different information about the mobile device can be retrieved from the register.

In an exemplary implementation form, the method comprises: verifying, by the network registry, a trust level of the application before transmitting the device information of the at least one mobile device to the application.

Verifying the trust level guarantees a safe realization of the pairing.

In an exemplary implementation form of the method, verifying the trust level comprises requesting the user of the at least one mobile device for permission to share the device information of the at least one mobile device; and transmitting the device information based on an acknowledgment from the user.

This provides the advantage that the user can decide which device information he wants to share and which are not sharable.

In an exemplary implementation form, the method comprises: transmitting, upon successive verification of the trust level by the network registry, the device information of all mobile devices allocated to the user, to the application.

This provides the advantage that the application is informed about all mobile devices allocated to the user.

In an exemplary implementation form, the method comprises: transmitting, by the network registry, device information of a new mobile device to the application when allocating the new mobile device to the register of the network registry related to a user.

This provides the advantage that the application is instantly informed about new available devices and can decide whether to perform pairing with these new devices within a particular user context.

In an exemplary implementation form of the method, the application runs on a device, in particular a server, that is coupled with the at least one mobile device via a wide area network (WAN), in particular via the Internet.

This provides the advantage that the method provides global functionality. Pairing is not limited by a geographical location or by the location of a local area network (LAN) or wireless local area network (WLAN).

According to a second aspect, the invention relates to a network registry for registering mobile devices with users, the network registry comprising: a register, configured to allocate mobile devices to users based on device identification information and user identification information, wherein the register stores device information of at least one mobile device associated to a user; a receiver, configured to receive, from an application, a request for device information, the request comprising user identification information, in particular a unique reference of the user to an agreement with an operator of the network registry; a processor, configured to retrieve, from the register, the device information of the at least one mobile device associated to the user which is related to the user identification information; and a transmitter, configured to transmit the device information of the at least one mobile device to the application.

Such a network registry can be applied for a flexible pairing service that overcomes the limitations described above. There is no limitation of "usage area" where the pairing can occur. There is also no limitation to specific devices/applications/eco-systems. Furthermore, simultaneous pairing of multiple devices with multiple applications can be realized. There is no need for proximity to a primary device for pairing or for a local WiFi network for interconnection. Vendor-specific services can interoperate with vendor-specific devices and simultaneous pairing of multiple devices with one or more applications can be achieved.

In an exemplary implementation form of the network registry, the receiver is configured to receive the device information of the at least one mobile device together with identification information of the at least one mobile device, in particular an International Mobile Station Equipment Identity (IMEI); and the processor is configured to register the device information of the at least one mobile device in the register of the network registry based on the identification information of the at least one mobile device.

This provides the advantage that the network registry can efficiently assign the device information to the devices stored in the register by looking up the identification information, e.g. IMEI of the respective devices. The IMEI represents a unique identifier of a mobile device in contrast to the MSISDN (telephone number) which is assigned to the user (subscriber). A user may have one MSISDN for multiple devices. The network registry knows which devices are allocated to which user, e.g. by generating a new device entry into the data field of a user upon registration of a new device, for example when the user purchases or registers the new device. The data field of a user can be retrieved based on user identification information, e.g. a reference to a contract of the user with the mobile network operator.

In an exemplary implementation form of the network registry, the processor is configured to verify a trust level of the application before enabling the transmitter to transmit the device information of the at least one mobile device to the application.

Verifying the trust level guarantees a safe realization of the pairing.

According to a third aspect, the invention relates to an application or a service for connecting, in particular pairing, with at least one mobile device, the application or service comprising: receiving, by a user, user identification information, in particular a unique reference of the user to an agreement with an operator of a network registry; transmitting a request for device information to the network registry, wherein the request for device information comprises the user identification information; receiving, from the network registry, a response to the request, wherein the response comprises the device information of the at least one mobile device; and connecting, in particular pairing, with the at least one mobile device by using the device information of the at least one mobile device.

Such an application or service can be applied for a flexible pairing service that overcomes the limitations described above. There is no limitation of "usage area" where the pairing can occur. There is also no limitation to specific devices/applications/eco-systems. Simultaneous pairing of multiple devices with multiple different applications can be realized. The application or service can be implemented, for example, as a computer program.

In an exemplary implementation form of the application or service, the connecting, in particular the pairing, is implemented as a function within the application or service.

This provides the advantage that such a function can be flexibly used by any other applications or any other services, e.g. by a function call.

In an exemplary implementation form of the application or service, the device information of the at least one mobile device comprises at least one of the following: International Mobile Equipment Identity (IMEI), device capabilities, IP address, eUICC ID, additional identifiers.

This provides the advantage that a variety of different information about the mobile device can be retrieved from the register.

According to a fourth aspect, the invention relates to a communication system, comprising: at least one mobile device; at least one application according to the third aspect of the invention; and a network registry according to the second aspect of the invention, wherein the at least one application is configured to connect, in particular to perform a pairing, with the at least one mobile device based on an activation of the at least one mobile device or based on an activation of the at least one application.

Such a communication system provides a flexible pairing service. The communication system has no limitation of "usage area" where the pairing can occur. Pairing can be performed through networks such as WANs or the Internet and throughout geographical positions. Any device/application/eco-system can be applied for the pairing. Simultaneous pairing of multiple devices with multiple different applications can be realized.

According to a fifth aspect the invention relates to a computer program product comprising program code for performing the method according to the first aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1a shows a schematic diagram illustrating a client environment 100a including a variety of applications 110 applicable by the client 140 on a variety of mobile devices 120;
Fig. 1b shows a schematic diagram illustrating a client environment 100b with mobile pairing service (MPS) 130 according to the disclosure for coordinating pairing of multiple applications with multiple devices;
Fig. 2 shows a schematic diagram illustrating an exemplary process flow within a mobile pairing system (MPS) 200 according to the disclosure;
Fig. 3 shows a screenshot 300 of a smartphone illustrating connection of a new service 210 within a mobile pairing system according to the disclosure;
Fig. 4 shows a screenshot 400 of a smartphone illustrating connection of a new device 225 within a mobile pairing system according to the disclosure;
Fig. 5 shows a schematic diagram of a mobile pairing system 500 according to the disclosure illustrating connection of a new service 510;
Fig. 6 shows a schematic diagram of a mobile pairing system 600 according to the disclosure illustrating connection of a new device 520;
Fig. 7 shows a schematic diagram illustrating an exemplary method 700 for pairing an application with a mobile device according to the disclosure;
Fig. 8 shows a block diagram of an exemplary network registry 800 according to the disclosure; and
Fig. 9 shows a schematic diagram of an exemplary mobile pairing system 900 according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following, techniques for pairing an application with a device are described. The first connection setup, in which Bluetooth devices (or in general mobile devices) are coupled, is also referred to as pairing. The communication partners exchange identification data so that they can automatically recognize themselves the next time. This kind of pairing can also be applied to mobile devices connecting to applications and vice versa. A Bluetooth device (or in general a mobile device) can be visible or invisible to other Bluetooth wireless operators. Visible means that it can be recognized as a Bluetooth device when other radio operators ask for it. Invisible means that it does not respond to requests from other devices.

In the following eSIMs and download of eSIM profiles to mobile devices according to the GSMA standard are described. A subscriber identity module (SIM) is an integrated circuit that is intended to store the International Mobile Subscriber Identity (IMSI) number and its related authentication key, which are used to identify and authenticate subscribers on mobile telephony devices such as mobile phones and computers. It is also possible to store contact information on SIM cards. A SIM card contains its unique serial number "ICCID", international mobile subscriber identity (IMSI) number, security authentication and ciphering information, temporary information related to the local network, a list of the services the user has access to, and two passwords: a personal identification number (PIN) for ordinary use, and a personal unblocking code (PUK) for PIN unlocking.

Embedded SIM (eSIM) is an initiative by GSMA to develop a new SIM standard that allows re-programmability and remote activation, giving customers the ability to switch carriers without getting a new SIM card. The concept described in this disclosure can also be applied to other SIM solutions, e.g. iSIM (integrated SIM) or soft SIM in the context of a pure software based solution without any secure hardware element.

The GSMA's Embedded SIM Specification provides a de-facto standard mechanism for 1) Customer Subscriber Identification Modules, SIMs and for 2) Machine-to-Machine Subscriber Identification Modules, M2M SIMs. With respect to M2M SIM, the specification describes the remote provisioning and management of machine to machine (M2M) connections, allowing the "over the air" provisioning of an initial operator subscription, and the subsequent change of subscription from one operator to another. GSMA Embedded SIM is an enabler for Machine to Machine (M2M) connections including the simple and seamless mobile connection of all types of connected machines. The latest version of the GSMA specification includes Profile Interoperability that simplifies the process of connecting M2M devices and enhance the flexibility for how mobile network operators and original equipment manufacturers (OEMs) are doing business.

Fig. 1a shows a schematic diagram illustrating a client environment 100a including a variety of applications 110 applicable by the client 140 on a variety of mobile devices 120. Clients 140 will use more and more (mobile) connected devices 120, not only smart phones and tablets but also smart watches, smart gadgets, smart equipment and clothing etc. as shown in Fig. 1a. These devices 120 are not necessarily part of a local network (LAN, WLAN) or connected to a central managing device, e.g. Smartphone via NFC or Bluetooth. These devices will initially only be connected via the mobile network (Wide Area Network, WAN). Any new device of a given customer or client or user 140 cannot automatically be paired to his used applications 110 if the device is only connected to the mobile network (WAN). The device 120 does not automatically know the customer's 140 used application 110. The application 110 does not automatically know the customer's 140 device 120.

Fig. 1b shows a schematic diagram illustrating a client environment 100b with mobile pairing service (MPS) 130 according to the disclosure for coordinating pairing of multiple applications 110 with multiple devices 120. The MPS 130 can be used for connecting mobile devices 120 as described in Fig. 1a with applications 110 as described in Fig. 1a without the limitations of current pairing described above. The mobile pairing service 130 connects devices of the customer 140 with application(s) of the customer 140 or vice versa. The devices may include an eSIM (embedded or electronic SIM) 102, a SIM 103 and/or other interfaces, e.g. WiFi, LTE, etc.

A multi device management module 101 (any mobile device management) can manage and control functionality of the mobile device 120. Multi device management module 101 can be used for the administration of mobile devices, such as smartphones, tablet computers, laptops and desktop computers. Multi device management 101 can, for example, be implemented with the use of a third party product that has management features for particular vendors of mobile devices. Multi device management 101 functionality can include over-the-air programming, distribution of applications, data and configuration settings for all types of mobile devices, including mobile phones, smartphones, tablet computers, mobile computers, mobile printers, mobile devices, etc. The mobile pairing service 130 as described in Fig. 1b provides an open interface for non-discriminatory pairing with devices without ecosystem borders. I.e. devices and applications from different vendors, e.g. Apple, Android, etc. can be connected via the mobile pairing service 130. Further characteristics and functionalities of MPS 130 are described in the following.

The mobile pairing service 130 links information about customer's devices with applications chosen by that customer. This leverages the capabilities of multiple connected devices for innovative new services and increases customer satisfaction. Due to its open, neutral and universal nature as well as implementation via standardized interfaces, MPS fosters a "democratization" of mainstream and long tail applications. It treats all players equally, works instantly and everywhere and- last but not least - MPS is secure.

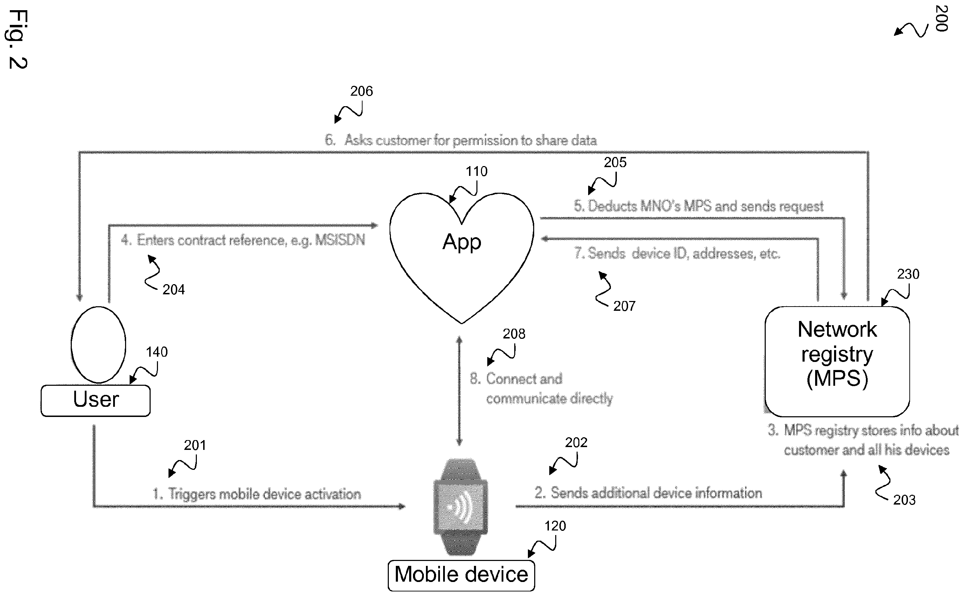

Fig. 2 shows a schematic diagram illustrating an exemplary process flow of a mobile pairing system (MPS) 200 according to the disclosure. The Mobile Pairing Service (MPS) links information about customer's devices with applications chosen by that customer across networks. This new pairing method leverages the capabilities of multiple connected devices for innovative new services and increases customer satisfaction. The mobile pairing system 200 includes one or more mobile devices 120 of a user or client 140, one or more applications 110 of the user 140 and a network registry 230. The network registry 230 is a network entity including a database for storing information about the customer or user 140 and all (or some) of his devices.

For pairing a mobile device 120 with an application 110, the following exemplary process flow may be implemented:
Step 1: User 140 triggers 201 mobile device 120 activation (e.g. via the eSIM process, according to GSMA standard) so that the device 120 can access a WAN or (W)LAN network.
Step 2: Within this process / or separate, the device 120 sends 202 additional information via the above activated network to the mobile network operator, e.g. to network registry (MPS) 230 such as e.g. IMEI, device capabilities, current IP address, eUICC ID, potentially additional identifiers, etc.
Step 3: The MNO stores 203 device information in the context of user contract data in a central MPS registry 230. MNO knows which devices 120 are allocated to which user 140.
Step 4: User 140 opens application 110 and registers to a 3^{rd} party application. He enters 204 his MSISDN or another unique reference to his connectivity contract with the MNO.
Step 5: Application 110 deducts the operator - who acts as MPS service provider - (e.g. from the MSISDN via MNP database) and sends 205 a request for information.
Step 6 (optional): MPS 230 checks the trust level of the requesting application 110. The MPS 230 may contact the user 140 to ask 206 for permission to share this data. Checking the trust level is an optional step.
Step 7: If trust level is successfully checked: MPS 230 returns 207 the identifiers, capabilities and addresses of all devices 120 related to the user 140 contract to the requesting application 110. The MPS 230 stores information about the requesting application 110 (see additional use case below).
Step 8: The application 110 connects 208 itself directly to all relevant customer devices 120. The application 110 may ask the user 140 for consent to include the proposed devices 120.

The following additional use case is also supported by the mobile pairing system 200: Whenever a new device is added to the user's 140 connectivity contract, MPS 230 may automatically inform all "paired" applications about the new device, including its type, capabilities, address, etc.

There may be further methods to register customer's 140 devices 120 to the MPS 230, for example according to the following Example scenario: The connected device is a Fitness bracelet; Device capabilities (exemplary and simplified) are the following: measure pulse, play sound, play stereo music, retrieve user input via keyboard, etc. The pairing application is a health service that combines data from various health and sport devices to get an overview of the customer's health. Based on this health data, the application can show summarized health data such as pulse, weight, steps, speed, distance tracked, calories burned, etc.

The mobile pairing system 200 illustrated in Figure 2 comprises the following elements that are different from currently existing pairing systems: A central device registry 230 that combines information of customer 140 (e.g. from mobile connectivity contract) and information of customer's connected devices 120; a standardized method to guarantee successful information exchange between devices 120 and MPS 230, this method can be included as a part of GSMA standard, for example; and an automatic message flow (Steps 1 to 8 depicted in Fig. 2) that informs connected applications 110 about new devices 120.

The steps 1 to 3 of the message flow may be performed when activating or initializing the mobile device, e.g. when powering up the mobile device or when assigning an IP address to the mobile device or when the user 140 performs another action with the mobile device. Steps 4 to 8 may be performed when the user initializes an application 110, e.g. when starting the application or calling the application or activating the application. Steps 1 to 3 and steps 4 to 8 can be performed at different times. However steps 1 to 3 should be performed prior to steps 4 to 8 as the MPS registry should store the information about customer and his devices before being able to answer the request 205 for device information from the application 110. Step 6 is optional, there may be implementations without Step 6, i.e. where the user 140 is not asked 206 for permission to share data, for example in cases where this permission is already existing, e.g. based on the contract with the MNO.

The mobile pairing system (MPS) 200 allows automatically pairing of customer's devices and applications used by the customer that are not connected to the same primary device or located in the same local network. The pairing method allows all devices and applications to connect universally. Additionally, multiple devices can be paired to an application simultaneously on a global scale. In addition, there are no limits of closed ecosystems such as Apple, Android or Windows, applications can work beyond ecosystems and hence are able to connect with different vendor-specific devices.

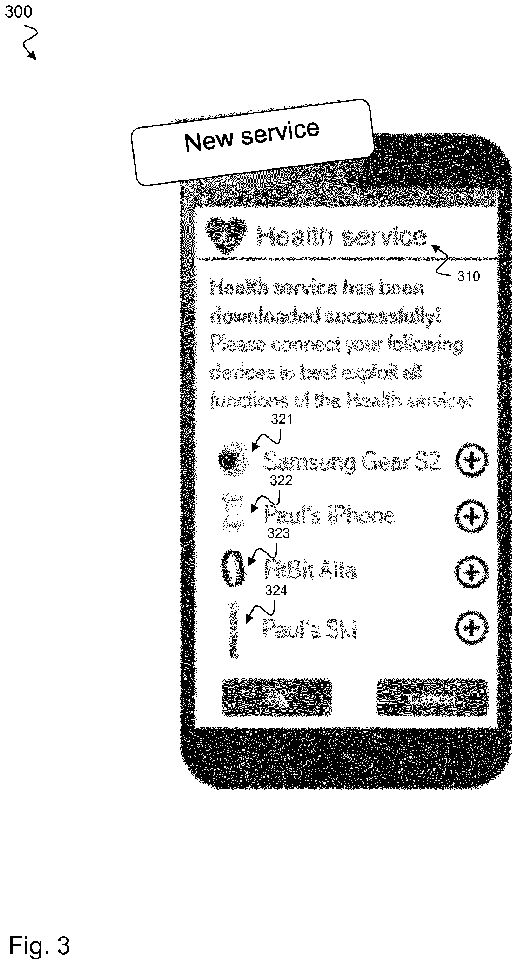

Fig. 3 shows a screenshot 300 of a smartphone illustrating connection of a new service 210 within a mobile pairing system according to the disclosure. The screenshot 300 illustrates the following user story:
Paul owns several connected devices, e.g. Samsung Gear S2, 321, Paul's iPhone 322, FitBit Alta 323, Paul's Ski 324 and has found a new app (Health service) 310 that combines data of all his devices 321, 322, 323, 324 for a complete overview of his fitness and health. After the successful app download, Paul just entered his phone number and the Health App 310 automatically displays Paul's relevant devices 321, 322, 323, 324 which he can easily add. If a device is connected, the device sends directly data to the Health App 310.

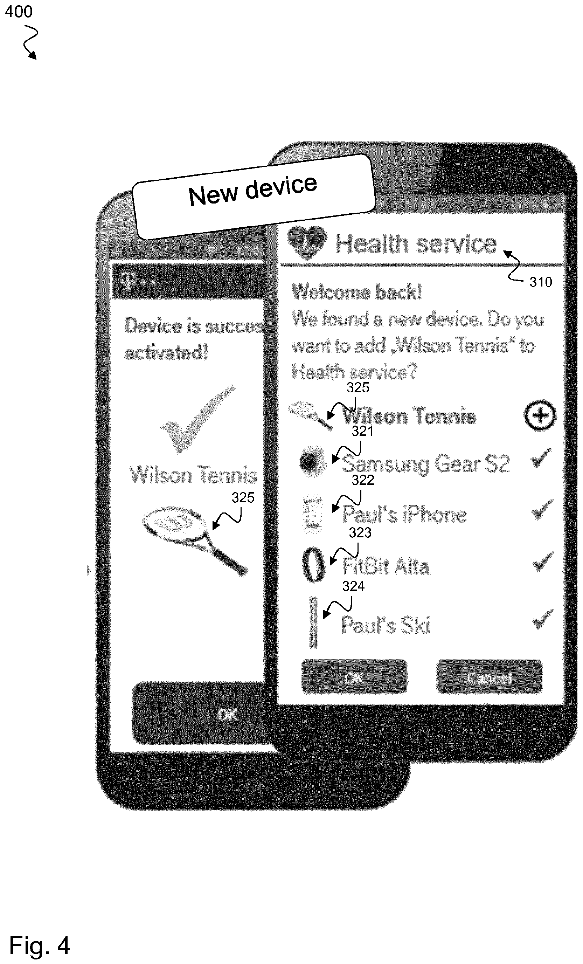

Fig. 4 shows a screenshot 400 of a smartphone illustrating connection of a new device 225 within a mobile pairing system according to the disclosure. The screenshot 400 illustrates the following user story:
Paul owns several connected devices, e.g. Samsung Gear S2, 321, Paul's iPhone 322, FitBit Alta 323, Paul's Ski 324 and uses the App (Health service) 310, an application that combines the data of all his devices 321, 322, 323, 324 for a complete overview of his fitness and health. Paul has bought a new smart tennis racket 325. After the successful eSIM device activation, the Health APP 310 displays at next app use automatically Paul's new device 325 which he can now add easily to the list of his already connected devices 321, 322, 323, 324.

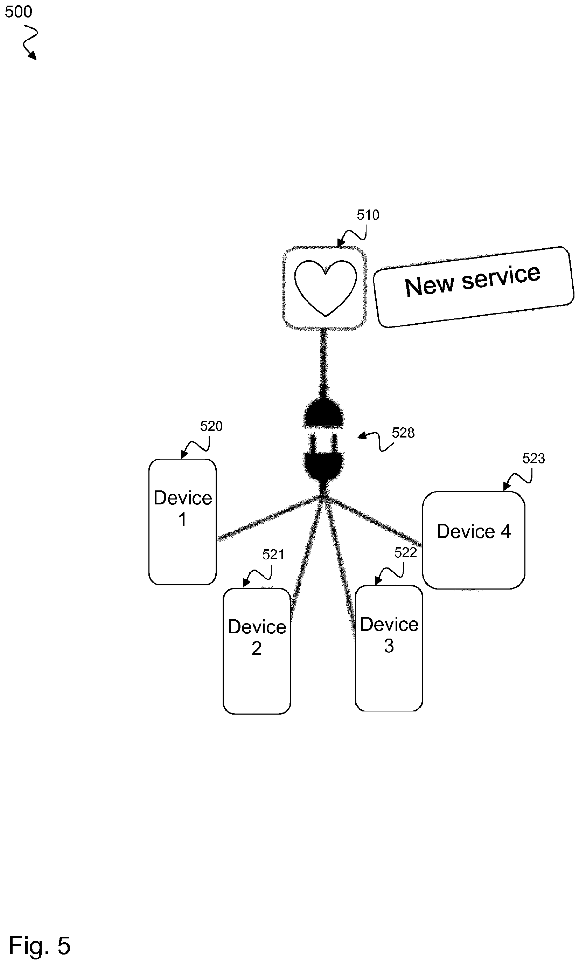

Fig. 5 shows a schematic diagram of a mobile pairing system 500 according to the disclosure illustrating connection of a new service 510. The mobile pairing system 500 illustrates the customer scenario depicted in Fig. 3 from a technical view point. When a new service 510 is started by the user, the mobile pairing service automatically provides the new service 510 with information about connected devices 520, 521, 522, 523. This is illustrated by the plug 528 that is connected to the new service 510 connecting the new service 510 to all connected devices 520, 521, 522, 523 of the client.

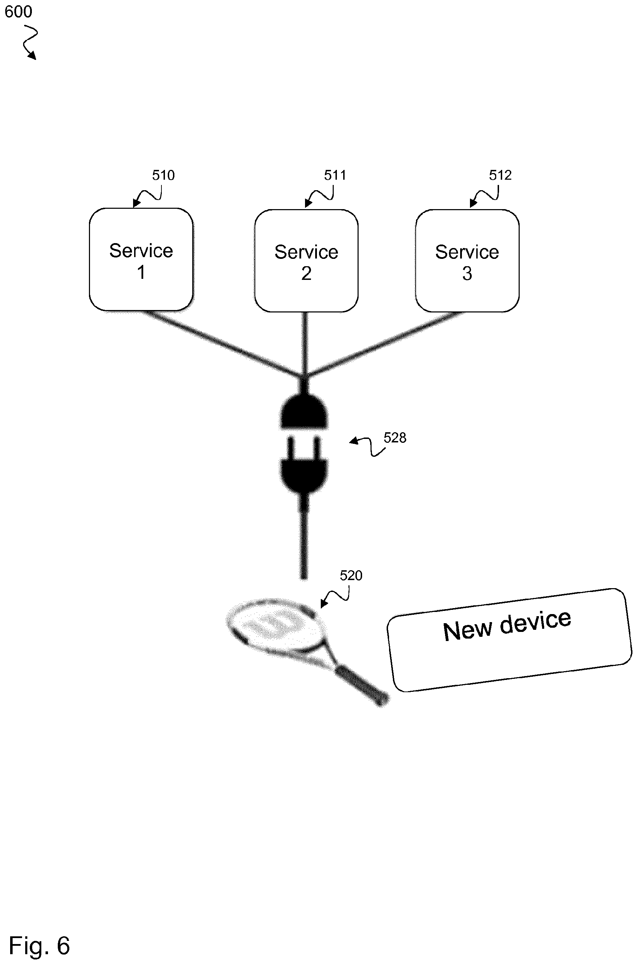

Fig. 6 shows a schematic diagram of a mobile pairing system 600 according to the disclosure illustrating connection of a new device 520. The mobile pairing system 600 illustrates the customer scenario depicted in Fig. 4 from a technical view point. When a new device 520 is activated by the user, the mobile pairing service automatically provides the connected services 510, 511, 512 of the customer with information about the new device 520. This is illustrated by the plug 528 that is connected to the existing services 510, 511, 512 connecting the existing services 510, 511, 512 of the client to the new devices 520.

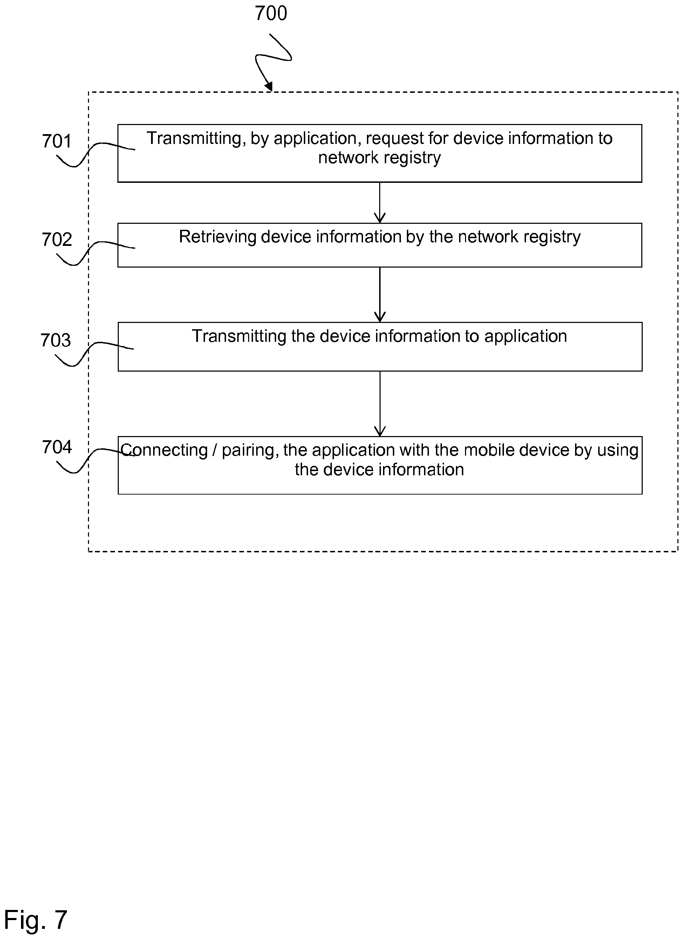

Fig. 7 shows a schematic diagram illustrating an exemplary method 700 for connecting or pairing an application, e.g. an application 110 or service 310, 510, 511, 512 as described above with respect to Figures 1 to 6, with a mobile device, e.g. a device 120, 321, 322, 323, 324, 325, 520, 521, 522, 523 as described above with respect to Figures 1 to 6, according to the disclosure. The method 700 is an exemplary representation of the MPS process flow described above with respect to Fig. 2.

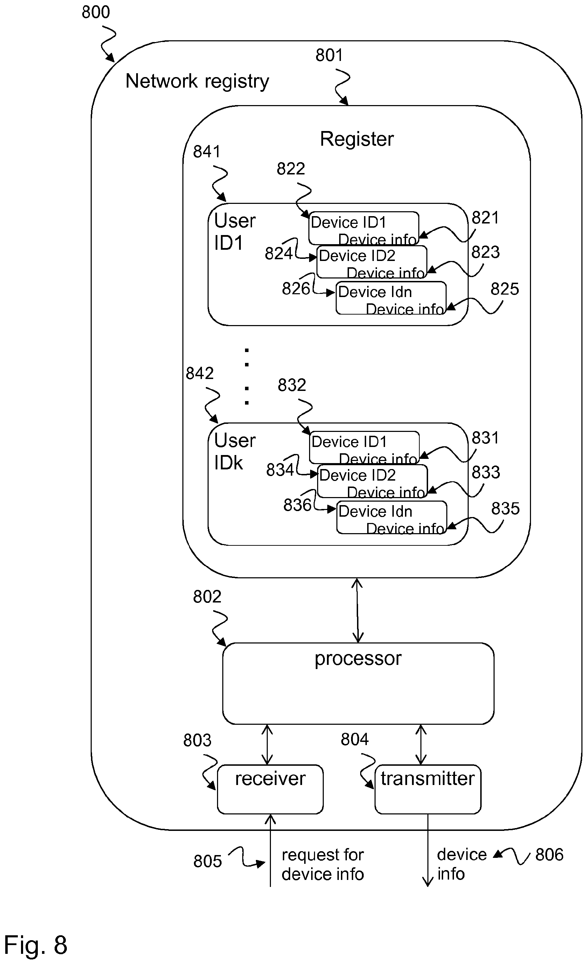

The method 700 includes transmitting 701, by the application 110, a request for device information, e.g. a request 205 as described above with respect to Fig. 2, to a network registry, e.g. a network registry 230, 800 as described with respect to Figs. 2 and 8, wherein the request 205 for device information comprises user identification information, in particular a unique reference of the user 140 to an agreement with an operator of the network registry 230.

The method 700 includes retrieving 702, by the network registry 230, 800, device information of the at least one mobile device 120 based on the user identification information, wherein the network registry 230 comprises a register, e.g. a register 801 as described with respect to Fig. 8, that allocates mobile devices 120 to users 140 based on device identification information and user identification information.

The method 700 includes transmitting 703, by the network registry 230, 800, the device information of the at least one mobile device 120 to the application 110, e.g. transmitting 207 as described above with respect to Fig. 2.

The method 700 includes connecting 704, in particular pairing, by the application 110 or the at least one mobile device 120, the application 110 with the at least one mobile device 120 by using the device information of the at least one mobile device 120, e.g. pairing 208 as described above with respect to Fig. 2.

The method 700 may further include receiving, by the network registry 230, 800, the device information of the at least one mobile device 120 from the at least one mobile device 120, before transmitting 703, 207 the device information to the application 110, e.g. receiving 202 as described above with respect to Fig. 2.

The method 700 may further include: receiving 202, by the network registry 230, 800, the device information of the at least one mobile device 120 upon activation of the at least one mobile device 120, in particular upon download of an eSIM 102 profile to the at least one mobile device 120 in accordance with a GSMA standard, e.g. an eSIM 102 as described above with respect to Fig. 1b.

The method 700 may include: receiving 202, by the network registry 230, 800, the device information of the at least one mobile device 120 together with identification information of the at least one mobile subscriber, in particular a Mobile Subscriber ISDN number (MSISDN). The method 700 may include registering 203, by the network registry 230, 800, the device information of the at least one mobile device 120 in the register (801) of the network registry 230, 800 based on the identification information of the at least one mobile subscriber, e.g. as described above with respect to Fig. 2.

The device information of the at least one mobile device 120 may comprise the following information: International Mobile Equipment Identity (IMEI), device capabilities, IP address, eUICC ID and/or additional identifiers.

The method 700 may further include verifying, by the network registry 230, 800, a trust level of the application 110 before transmitting 703, 207 the device information of the at least one mobile device 120 to the application 110, e.g. as described above with respect to Fig. 2. Verifying the trust level may include requesting 206 the user 140 of the at least one mobile device 120 for permission to share the device information of the at least one mobile device 120; and transmitting 703, 207 the device information based on an acknowledgment from the user 140, e.g. as described above with respect to Fig. 2.

The method 700 may include transmitting, upon successive verification of the trust level by the network registry 230, 800, the device information of all mobile devices 120 allocated to the user 140, to the application 110, e.g. as described above with respect to Fig. 2.

The method 700 may include transmitting, by the network registry 230, 800, device information of a new mobile device 120 to the application 110 when allocating the new mobile device 120 to the register 801 of the network registry 230, 800 related to a user, e.g. as described above with respect to Figs. 2, 4 and 6.

The application 110 may run on a device, in particular a server, that is coupled with the at least one mobile device 120 via a wide area network (WAN), in particular via the Internet.

Fig. 8 shows a block diagram of an exemplary network registry 800 according to the disclosure. The network registry is an exemplary implementation of the network registry 203 described above with respect to Fig. 2. The network registry 800 registers mobile devices 120 with users 140. The network registry 800 includes a register 801, a receiver 803, a processor 802 and a transmitter 804.

The register 801 is configured to allocate mobile devices 120 to users 140 based on device identification information 821, 823, 825 and user identification information 841, 842. The register 801 is configured to store device information 822, 824, 826 of at least one mobile device 120 associated to a user 140. Device identification information 821, 823, 825 may include an ID of the device, e.g. a network address or an IP address of the device or any other identifier uniquely identifying the device. User identification information 841, 842 identifies the respective user, e.g. by a telephone number or MSISDN or any other user-specific characteristic. User identification information 841 may for example include a unique reference of the user 140 to an agreement with an operator of the network registry 800, 203.

The receiver 803 is configured to receive, from an application 110, a request 805 for device information, e.g. a request 205 as described above with respect to Fig. 2. The request 805, 205 comprises user identification information 841, in particular a unique reference of the user 140 to an agreement with an operator of the network registry 800, 203.

The processor 802 is configured to retrieve, from the register 801, the device information 822, 824, 826 of the at least one mobile device 120 associated to the user 140 which is related to the user identification information 841. For example, user identification information 842 identifies User K; Then, the processor 802 points to the data entry of user k 842 to retrieve the device information 832, 834, 836 of all devices 831, 833, 835 associated to User k 842 from the register 801.

The transmitter 804 is configured to transmit 806 the device information 822, 824, 826 of the at least one mobile device 120 to the application 110, e.g. according to the transmitting 207 as described above with respect to Fig. 2.

The receiver 803 may receive 202 the device information 822, 824, 826 of the at least one mobile device 120 together with identification information 821, 823, 825 of the at least one mobile device 120, in particular a mobile station integrated services digital number (MSISDN). The processor 802 may register the device information 822, 824, 826 of the at least one mobile device 120 in the register 801 of the network registry 800 based on the identification information 821, 823, 825 of the at least one mobile device 120, e.g. as described above with respect to Fig. 2.

The processor 802 may be configured to verify a trust level of the application 110 before enabling the transmitter 804 to transmit 806 the device information 822, 824, 826 of the at least one mobile device 120 to the application 110, e.g. as described above with respect to Fig. 2.

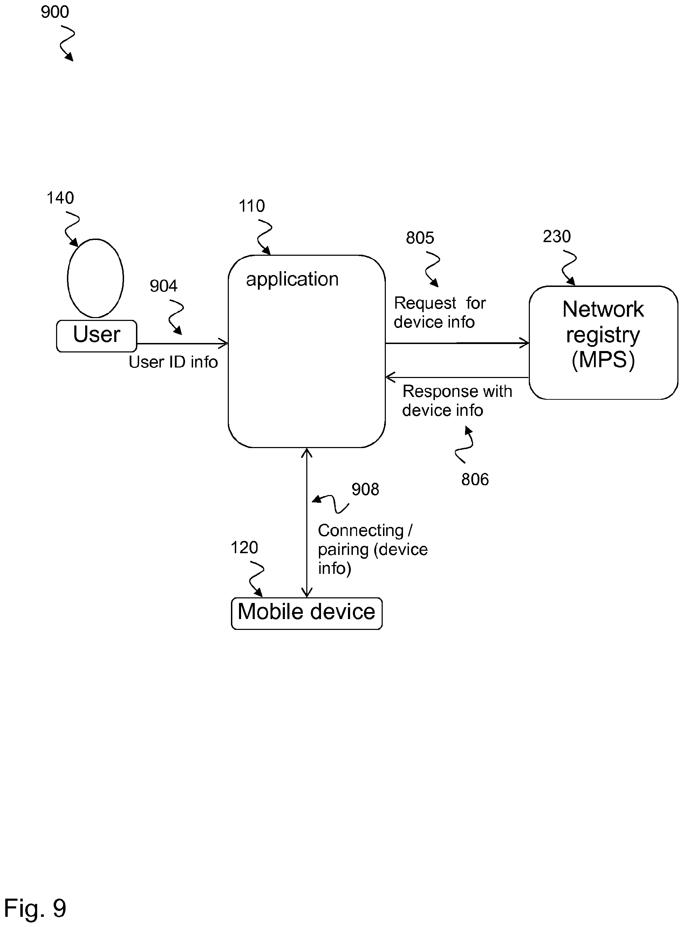

Fig. 9 shows a schematic diagram of an exemplary mobile pairing system 900 according to the disclosure. The mobile pairing system 900 includes an application 110, a mobile device 120 and a network registry (MPS) 230, e.g. according to the description of Figure 2.

The application 110 can be used for connecting, in particular pairing, with one or more mobile devices 120. The application 110 includes receiving 904, 204, by a user 140, user identification information, in particular a unique reference of the user 140 to an agreement with an operator of a network registry 230, 800. The application includes transmitting 805 a request 205 for device information to the network registry 230, 800, e.g. as described above with respect to Figures 2 to 8. The request 205 for device information comprises the user identification information. The application 110 further includes receiving 806, from the network registry 230, 800, a response 207 to the request 205, e.g. as described above with respect to Figure 2. The response 207 comprises the device information of the at least one mobile device 120. The application further includes connecting 908, 208, in particular pairing, with the at least one mobile device 120 by using the device information of the at least one mobile device 120, e.g. as described above with respect to Figures 2 to 8.

The device information of the at least one mobile device 120 may comprise one or more of the following information: International Mobile Equipment Identity (IMEI), device capabilities, IP address, eUICC ID, additional identifiers.

The mobile pairing system 900 of Fig. 9 can implement a communication system 900, comprising: at least one mobile device 120; at least one application 110 as described above; and a network registry 230, 800, e.g. as described above with respect to Figures 2 to 8. The at least one application 110 is configured to connect, in particular to perform a pairing, with the at least one mobile device 120 based on an activation of the at least one mobile device 120 or based on an activation of the at least one application 110. The activation may be manually performed by the user or automatically by the device.

Another aspect of the invention is related to a computer program product comprising program code for performing the method 700 or the message chart 200 described above, when executed on a computer or a processor. The methods 700, 200 may be implemented as program code that may be stored on a non-transitory computer medium. The computer program product may implement the application 110 or service as described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A method (700) for pairing an application (110) with at least two mobile devices (120), the method (700) comprising:
transmitting (701), by the application (110), a request (205) for device information to a network registry (230, 800), wherein the request (205) for device information comprises a unique reference of the user (140) to an agreement with an operator of the network registry (230);
retrieving (702), by the network registry (230, 800), device information of all devices of the user related to the agreement with the operator of the network registry (230) based on the unique reference of the user (140), wherein the network registry (230) comprises a register (801) that stores device information of all devices of the user related to the agreement with the operator of the network registry (230) based on device identification information and user identification information, wherein the all devices of the user comprise at least two devices;
transmitting (703, 207), by the network registry (230, 800), the device information of all devices of the user related to the agreement with the operator of the network registry (230) to the application (110);
pairing (704, 208) by the application (110) or the at least two mobile devices (120), the application (110) with the at least two mobile devices (120) by using the device information of all devices of the user related to the agreement with the operator of the network registry (230);
providing, by the network registry (230, 800), information about the at least two paired mobile devices to all other applications of the user (140); and
storing, by the network registry (230, 800), information about the requesting application (110) in order to notify all paired applications about a new device of the user (140).

2. The method (700) of claim 1, comprising:
receiving (202), by the network registry (230, 800), device information of the at least two mobile devices (120) from the at least two mobile devices (120), before transmitting (703, 207) the device information of all devices of the user related to the agreement with the operator of the network registry (230) to the application (110).

3. The method (700) of claim 2, comprising:
receiving (202), by the network registry (230, 800), the device information of the at least two mobile devices (120) upon download of an eSIM (102) profile to the at least two mobile devices (120) in accordance with a GSMA standard.

4. The method (700) of claim 2 or 3, comprising:
receiving (202), by the network registry (230, 800), the device information of the at least two mobile devices (120) together with identification information of a mobile subscriber; and
registering (203), by the network registry (230, 800), the device information of the at least two mobile devices (120) in the register (801) of the network registry (230, 800) based on the identification information of the mobile subscriber.

5. The method (700) of one of the preceding claims,
wherein the device information of all devices of the user related to the agreement with the operator of the network registry (230) comprises at least one of the following: International Mobile Equipment Identity (IMEI), device capabilities, IP address, eUICC ID, additional identifiers.

6. The method (700) of one of the preceding claims, comprising:
verifying, by the network registry (230, 800), a trust level of the application (110) before transmitting (703, 207) the device information of all devices of the user related to the agreement with the operator of the network registry (230) to the application (110).

7. The method (700) of claim 6,
wherein verifying the trust level comprises requesting (206) the user (140) of all the devices for permission to share the device information of all devices of the user related to the agreement with the operator of the network registry (230); and transmitting (703, 207) the device information based on an acknowledgment from the user (140).

8. The method (700) of claim 6 or 7, comprising:
transmitting, upon successive verification of the trust level by the network registry (230, 800), the device information of all devices of the user related to the agreement with the operator of the network registry (230) to the application (110).

9. The method (700) of one of the preceding claims, comprising:
transmitting, by the network registry (230, 800), device information of a new mobile device (120) of the user to the application (110) when allocating the new mobile device (120) to the register (801) of the network registry (230, 800) related to the user.

10. The method (700) of one of the preceding claims,
wherein the application (110) runs on a server that is coupled with the at least two mobile devices (120) via a wide area network (WAN), in particular via the Internet.

11. A network registry (800, 203) for registering mobile devices (120) with users (140), the network registry (800, 203) comprising:
a register (801), configured to store device information of all devices of the user related to an agreement with an operator of the network registry (230) based on device identification information (821, 823, 825) and user identification information (841, 842), wherein the all devices of the user comprise at least two devices;
a receiver (803), configured to receive, from an application (110), a request (805, 205) for device information, the request (805, 205) comprising a unique reference of the user (140) to the agreement with the operator of the network registry (800, 203);
a processor (802), configured to retrieve, from the register (801), the device information (822, 824, 826) of all devices of the user related to the agreement with the operator of the network registry (230) which is related to the unique reference of the user (140);
a transmitter (804), configured to transmit (806, 207) the device information (822, 824, 826) of all devices of the user related to the agreement with the operator of the network registry (230) to the application (110),
wherein the transmitter (804) is further configured to provide information about at least two paired mobile devices to all other applications of the user (140),
wherein the register (801) is configured to store information about the requesting application (110) in order to notify all paired applications about a new device of the user (140).

12. The network registry (800, 203) of claim 11,
wherein the receiver (803) is configured to receive (202) the device information (822, 824, 826) of all devices of the user related to the agreement with the operator of the network registry (230) together with identification information (821, 823, 825) of the devices of the user related to the agreement with the operator of the network registry (230); and
wherein the processor (802) is configured to register the device information (822, 824, 826) of all devices of the user related to the agreement with the operator of the network registry (230) in the register (801) of the network registry (800, 203) based on the identification information (821, 823, 825) of the devices of the user related to the agreement with the operator of the network registry (230).

13. The network registry (800, 203) of claim 11 or 12,
wherein the processor (802) is configured to verify a trust level of the application (110) before enabling the transmitter (804) to transmit (806) the device information (822, 824, 826) of all the devices of the user related to the agreement with the operator of the network registry (230) to the application (110).

14. A communication system (900), comprising:
at least two mobile devices (120);
at least one application (110) or service for pairing with at least two mobile devices (120), the application (110) or service comprising:
receiving (904, 204), by a user (140), a unique reference of the user (140) to an agreement with an operator of a network registry (230, 800);
transmitting (805) a request (205) for device information to the network registry (230, 800), wherein the request (205) for device information comprises the unique reference of the user;
receiving (806), from the network registry (230, 800), a response (207) to the request (205), wherein the response (207) comprises device information of all devices of the user related to the agreement with the operator of the network registry (230), wherein the all devices of the user comprise at least two devices;
pairing (908, 208) with the at least two mobile devices (120) by using the device information of all devices of the user related to the agreement with the operator of the network registry (230); and
receiving a notification from the network registry (230, 800) about a new device of the user (140), wherein information about the requesting application (110) is stored in the network registry (230, 800) in order to notify all paired applications about the new device of the user (140); and
a network registry (230, 800) according to one of claims 11 to 13,
wherein the at least one application (110) or service is configured to perform a pairing with the at least two mobile devices (120) based on an activation of the at least two mobile devices (120) or based on an activation of the at least one application (110) or service.

15. The communication system of claim 14,
wherein the pairing (908, 208) is implemented as a function within the application or service.

16. The communication system of claim 14 or 15,
wherein the device information of all the devices of the user related to the agreement with the operator of the network registry (230) comprises at least one of the following: International Mobile Equipment Identity (IMEI), device capabilities, IP address, eUICC ID, additional identifiers.

## Patentansprüche

1. Verfahren (700) zur Paarung einer Anwendung (110) mit mindestens zwei Mobilgeräten (120), wobei das Verfahren (700) umfasst:
das Übertragen (701) einer Anfrage (205) bezüglich Geräteinformationen durch die Anwendung (110) an eine Netzwerk-Registry (230, 800), wobei die Anfrage (205) bezüglich Geräteinformationen einen eindeutigen Bezug des Nutzers (140) auf eine Übereinkunft mit einem Operator der Netzwerk-Registry (230) aufweist;
das Abrufen (702) von Geräteinformationen aller Geräte des Nutzers, die Übereinkunft mit dem Operator der Netzwerk-Registry (230) betreffend, auf der Grundlage des eindeutigen Bezugs des Nutzers (140) durch die Netzwerk-Registry (230, 800), wobei die Netzwerk-Registry (230) ein Register (801) aufweist, das Geräteinformationen aller Geräte des Nutzers, die Übereinkunft mit dem Operator der Netzwerk-Registry (230) betreffend, auf der Grundlage von Geräteidentifizierungsinformationen und Nutzeridentifizierungsinformationen speichert, wobei alle Geräte des Nutzers mindestens zwei Geräte umfassen;
das Übertragen (703, 207) der Geräteinformationen aller Geräte des Nutzers, die Übereinkunft mit dem Operator der Netzwerk-Registry (230) betreffend, durch die Netzwerk-Registry (230, 800) an die Anwendung (110);
das Paaren (704, 208) der Anwendung (110) mit den mindestens zwei Mobilgeräten (120) durch die Anwendung (110) oder die mindestens zwei Mobilgeräte (120) unter Verwendung der Geräteinformationen aller Geräte des Nutzers, die Übereinkunft mit dem Operator der Netzwerk-Registry (230) betreffend;
das Bereitstellen von Informationen über die mindestens zwei gepaarten Mobilgeräte durch die Netzwerk-Registry (230, 800) an alle anderen Anwendungen des Nutzers (140); und
das Speichern von Informationen über die anfragende Anwendung (110) durch die Netzwerk-Registry (230, 800), um alle gepaarten Anwendungen über ein neues Gerät des Nutzers (140) zu benachrichtigen.

2. Verfahren (700) nach Anspruch 1, das umfasst:
das Empfangen (202) von Geräteinformationen der mindestens zwei Mobilgeräte (120) von den mindestens zwei Mobilgeräten (120) durch die Netzwerk-Registry (230, 800) vor dem Übertragen (703, 207) der Geräteinformationen aller Geräte des Nutzers, die Übereinkunft mit dem Operator der Netzwerk-Registry (230) betreffend, an die Anwendung (110).

3. Verfahren (700) nach Anspruch 2, das umfasst:
das Empfangen (202) der Geräteinformationen der mindestens zwei Mobilgeräte (120) durch die Netzwerk-Registry (230, 800) beim Herunterladen eines Profils einer eSIM (102) auf die mindestens zwei Mobilgeräte (120) gemäß einem GSMA-Standard.

4. Verfahren (700) nach Anspruch 2 oder 3, das umfasst:
das Empfangen (202) der Geräteinformationen der mindestens zwei Mobilgeräte (120) zusammen mit Identifizierungsinformationen eines mobilen Teilnehmers durch die Netzwerk-Registry (230, 800); und
das Registrieren (203) der Geräteinformationen der mindestens zwei Mobilgeräte (120) in dem Register (801) der Netzwerk-Registry (230, 800) auf der Grundlage der Identifizierungsinformationen des mobilen Teilnehmers durch die Netzwerk-Registry (230, 800).

5. Verfahren (700) nach einem der vorhergehenden Ansprüche,
wobei die Geräteinformationen aller Geräte des Nutzers, die Übereinkunft mit dem Operator der Netzwerk-Registry (230) betreffend, mindestens eines der folgenden Elemente umfassen: International Mobile Equipment Identity (IMEI), Gerätefähigkeiten, IP-Adresse, eUICC-ID, zusätzliche Kennungen.

6. Verfahren (700) nach einem der vorhergehenden Ansprüche, umfassend:
das Verifizieren einer Vertrauensstufe der Anwendung (110) durch die Netzwerk-Registry (230, 800) vor dem Übertragen (703, 207) der Geräteinformationen aller Geräte des Nutzers, die Übereinkunft mit dem Operator der Netzwerk-Registry (230) betreffend, an die Anwendung (110).

7. Verfahren (700) nach Anspruch 6,
wobei das Verifizieren der Vertrauensstufe das Anfragen (206) einer Erlaubnis bei dem Nutzer (140) aller Geräte, die Geräteinformationen aller Geräte des Nutzers, die Übereinkunft mit dem Operator der Netzwerk-Registry (230) betreffend, zu teilen; und das Übertragen (703, 207) der Geräteinformationen auf der Grundlage einer Bestätigung von dem Nutzer (140) umfasst.

8. Verfahren (700) nach Anspruch 6 oder 7, das umfasst:
das Übertragen, bei sukzessiver Verifizierung der Vertrauensstufe, der Geräteinformationen aller Geräte des Nutzers, die Übereinkunft mit dem Operator der Netzwerk-Registry (230) betreffend, durch die Netzwerk-Registry (230, 800) an die Anwendung (110).

9. Verfahren (700) nach einem der vorhergehenden Ansprüche, umfassend:
das Übertragen von Geräteinformationen eines neuen Mobilgeräts (120) des Nutzers durch die Netzwerk-Registry (230, 800) an die Anwendung (110), wenn das neue Mobilgerät (120) dem Register (801) der Netzwerk-Registry (230, 800), das dem Nutzer zugeordnet ist, zugewiesen wird.

10. Verfahren (700) nach einem der vorhergehenden Ansprüche,
wobei die Anwendung (110) auf einem Server läuft, der mit den mindestens zwei Mobilgeräten (120) über ein Weitverkehrsnetz (WAN, Wide Area Network), insbesondere über das Internet, gekoppelt ist.

11. Netzwerk-Registry (800, 203) zum Registrieren von Mobilgeräten (120) mit Nutzern (140), wobei die Netzwerk-Registry (800, 203) aufweist:
ein Register (801), das dazu ausgebildet ist, Geräteinformationen aller Geräte des Nutzers, eine Übereinkunft mit einem Operator der Netzwerk-Registry (230) betreffend, auf der Grundlage von Geräteidentifizierungsinformationen (821, 823, 825) und Nutzeridentifizierungsinformationen (841, 842) zu speichern, wobei alle Geräte des Nutzers mindestens zwei Geräte umfassen;
einen Empfänger (803), der dazu ausgebildet ist, eine Anfrage (805, 205) bezüglich Geräteinformationen von einer Anwendung (110) zu empfangen, wobei die Anfrage (805, 205) einen eindeutigen Bezug des Nutzers (140) auf die Übereinkunft mit dem Operator der Netzwerk-Registry (800, 203) aufweist;
einen Prozessor (802), der dazu ausgebildet ist, die Geräteinformationen (822, 824, 826) aller Geräte des Nutzers, die Übereinkunft mit dem Operator der Netzwerk-Registry (230) betreffend, aus dem Register (801) abzurufen, die dem eindeutigen Bezug des Nutzers (140) zugeordnet sind;
einen Sender (804), der dazu ausgebildet ist, die Geräteinformationen (822, 824, 826) aller Geräte des Nutzers, die Übereinkunft mit dem Operator der Netzwerk-Registry (230) betreffend, an die Anwendung (110) zu übertragen (806, 207);
wobei der Sender (804) ferner dazu ausgebildet ist, allen anderen Anwendungen des Nutzers (140) Informationen über mindestens zwei gepaarte Mobilgeräte bereitzustellen, wobei das Register (801) dazu ausgebildet ist, Informationen über die anfragende Anwendung (110) zu speichern, um alle gepaarten Anwendungen über ein neues Gerät des Nutzers (140) zu benachrichtigen.

12. Netzwerk-Registry (800, 203) nach Anspruch 11,
wobei der Empfänger (803) dazu ausgebildet ist, die Geräteinformationen (822, 824, 826) aller Geräte des Nutzers, die Übereinkunft mit dem Operator der Netzwerk-Registry (230) betreffend, zusammen mit Identifizierungsinformationen (821, 823, 825) der Geräte des Nutzers, die Übereinkunft mit dem Operator der Netzwerk-Registry (230) betreffend, zu empfangen (202); und
wobei der Prozessor (802) dazu ausgebildet ist, die Geräteinformationen (822, 824, 826) aller Geräte des Nutzers, die Übereinkunft mit dem Operator der Netzwerk-Registry (230) betreffend, in dem Register (801) der Netzwerk-Registry (800, 203) auf der Grundlage der Identifizierungsinformationen (821, 823, 825) der Geräte des Nutzers, die Übereinkunft mit dem Operator der Netzwerk-Registry (230) betreffend, zu registrieren.

13. Netzwerk-Registry (800, 203) nach Anspruch 11 oder 12,
wobei der Prozessor (802) dazu ausgebildet ist, eine Vertrauensstufe der Anwendung (110) zu verifizieren, bevor dem Sender (804) ermöglicht wird, die Geräteinformationen (822, 824, 826) aller Geräte des Nutzers, die Übereinkunft mit dem Operator der Netzwerk-Registry (230) betreffend, an die Anwendung (110) zu übertragen (806).

14. Kommunikationssystem (900), das aufweist:
mindestens zwei Mobilgeräte (120);
mindestens eine Anwendung (110) oder mindestens einen Dienst zur Paarung mit mindestens zwei Mobilgeräten (120), wobei die Anwendung (110) oder der Dienst umfasst:
das Empfangen (904, 204), durch einen Nutzer (140), eines eindeutigen Bezugs des Nutzers (140) auf eine Übereinkunft mit einem Operator einer Netzwerk-Registry (230, 800);
das Übertragen (805) einer Anfrage (205) bezüglich Geräteinformationen an die Netzwerk-Registry (230, 800), wobei die Anfrage (205) bezüglich Geräteinformationen den eindeutigen Bezug des Nutzers aufweist;
das Empfangen (806) einer Antwort (207) auf die Anfrage (205) von der Netzwerk-Registry (230, 800), wobei die Antwort (207) Geräteinformationen aller Geräte des Nutzers, die Übereinkunft mit dem Operator der Netzwerk-Registry (230) betreffend, aufweist, wobei alle Geräte des Nutzers mindestens zwei Geräte umfassen;
das Paaren (908, 208) mit den mindestens zwei Mobilgeräten (120) unter Verwendung der Geräteinformationen aller Geräte des Nutzers, die Übereinkunft mit dem Operator der Netzwerk-Registry (230) betreffend; und
das Empfangen einer Benachrichtigung von der Netzwerk-Registry (230, 800) über ein neues Gerät des Nutzers (140), wobei Informationen über die anfragende Anwendung (110) in der Netzwerk-Registry (230, 800) gespeichert werden, um alle gepaarten Anwendungen über das neue Gerät des Nutzers (140) zu benachrichtigen; und
eine Netzwerk-Registry (230, 800) nach einem der Ansprüche 11 bis 13,
wobei die mindestens eine Anwendung (110) oder der mindestens eine Dienst dazu ausgebildet ist, eine Paarung mit den mindestens zwei Mobilgeräten (120) auf der Grundlage einer Aktivierung der mindestens zwei Mobilgeräte (120) oder auf der Grundlage einer Aktivierung der mindestens einen Anwendung (110) oder des mindestens einen Dienstes durchzuführen.

15. Kommunikationssystem nach Anspruch 14,
wobei das Paaren (908, 208) als eine Funktion in der Anwendung oder dem Dienst implementiert ist.

16. Kommunikationssystem nach Anspruch 14 oder 15,
wobei die Geräteinformationen aller Geräte des Nutzers, die Übereinkunft mit dem Operator der Netzwerk-Registry (230) betreffend, mindestens eines der folgenden Elemente umfassen: International Mobile Equipment Identity (IMEI), Gerätefähigkeiten, IP-Adresse, eUICC-ID, zusätzliche Kennungen.

## Revendications

1. Procédé (700) d'appariement d'une application (110) avec au moins deux dispositifs mobiles (120), le procédé (700) comprenant :
la transmission (701), par l'application (110), d'une demande (205) d'informations de dispositif à un registre de réseau (230, 800), la demande (205) d'informations de dispositif comprenant une référence unique de l'utilisateur (140) à un accord avec un opérateur du registre de réseau (230) ;
l'extraction (702), par le registre de réseau (230, 800), d'informations de dispositif de tous les dispositifs de l'utilisateur liés à l'accord avec l'opérateur du registre de réseau (230) sur la base de la référence unique de l'utilisateur (140), dans lequel le registre de réseau (230) comprend un registre (801) qui stocke des informations de dispositif de tous les dispositifs de l'utilisateur liés à l'accord avec l'opérateur du registre de réseau (230) sur la base d'informations d'identification de dispositif et d'informations d'identification d'utilisateur, tous les dispositifs de l'utilisateur comprenant au moins deux dispositifs ;
la transmission (703, 207), par le registre de réseau (230, 800), des informations de dispositif de tous les dispositifs de l'utilisateur liés à l'accord avec l'opérateur du registre de réseau (230) à l'application (110) ;
l'appariement (704, 208), par l'application (110) ou les au moins deux dispositifs mobiles (120), de l'application (110) avec les au moins deux dispositifs mobiles (120) en utilisant les informations de dispositif de tous les dispositifs de l'utilisateur liés à l'accord avec l'opérateur du registre de réseau (230) ;
la fourniture, par le registre de réseau (230, 800), d'informations concernant les au moins deux dispositifs mobiles appariés à toutes les autres applications de l'utilisateur (140) ; et
le stockage, par le registre de réseau (230, 800), d'informations concernant l'application requérante (110) afin d'informer toutes les applications appariées d'un nouveau dispositif de l'utilisateur (140).

2. Procédé (700) selon la revendication 1, comprenant :
la réception (202), par le registre de réseau (230, 800), d'informations de dispositif des au moins deux dispositifs mobiles (120) provenant des au moins deux dispositifs mobiles (120), avant la transmission (703, 207) à l'application (110) des informations de dispositif de tous les dispositifs de l'utilisateur liés à l'accord avec l'opérateur du registre de réseau (230).

3. Procédé (700) selon la revendication 2, comprenant :
la réception (202), par le registre de réseau (230, 800), des informations de dispositif des au moins deux dispositifs mobiles (120) suite à un téléchargement d'un profil eSIM (102) sur les au moins deux dispositifs mobiles (120) selon une norme GSMA.

4. Procédé (700) selon la revendication 2 ou 3, comprenant :
la réception (202), par le registre de réseau (230, 800), des informations de dispositif des au moins deux dispositifs mobiles (120) avec des informations d'identification d'un abonné mobile ; et
l'enregistrement (203), par le registre de réseau (230, 800), des informations de dispositif des au moins deux dispositifs mobiles (120) dans le registre (801) du registre de réseau (230, 800) sur la base des informations d'identification de l'abonné mobile.

5. Procédé (700) selon l'une quelconque des revendications précédentes,
dans lequel les informations de dispositif de tous les dispositifs de l'utilisateur liés à l'accord avec l'opérateur du registre de réseau (230) comprennent au moins un élément parmi les suivants : une identité internationale d'équipement mobile (IMEI), des capacités de dispositif, une adresse IP, un identifiant eUICC ID, des identifiants supplémentaires.

6. Procédé (700) selon l'une quelconque des revendications précédentes, comprenant :
la vérification, par le registre de réseau (230, 800), d'un niveau de confiance de l'application (110) avant la transmission (703, 207) à l'application (110) des informations de dispositif de tous les dispositifs de l'utilisateur liés à l'accord avec l'opérateur du registre de réseau (230).

7. Procédé (700) selon la revendication 6,
dans lequel la vérification du niveau de confiance comprend le fait de demander (206) à l'utilisateur (140) de tous les dispositifs la permission de partager les informations de dispositif de tous les dispositifs de l'utilisateur liés à l'accord avec l'opérateur du registre de réseau (230) ; et la transmission (703, 207) des informations de dispositif sur la base d'une confirmation de la part de l'utilisateur (140).

8. Procédé (700) selon la revendication 6 ou 7, comprenant :
la transmission à l'application (110), suite à une vérification successive du niveau de confiance par le registre de réseau (230, 800), des informations de dispositif de tous les dispositifs de l'utilisateur liés à l'accord avec l'opérateur du registre de réseau (230).

9. Procédé (700) selon l'une quelconque des revendications précédentes, comprenant :
la transmission à l'application (110), par le registre de réseau (230, 800), d'informations de dispositif d'un nouveau dispositif mobile (120) de l'utilisateur lorsque le nouveau dispositif mobile (120) est attribué au registre (801) du registre de réseau (230, 800) lié à l'utilisateur.

10. Procédé (700) selon l'une quelconque des revendications précédentes,
dans lequel l'application (110) est exécutée sur un serveur qui est couplé auxdits au moins deux dispositifs mobiles (120) par l'intermédiaire d'un réseau étendu (WAN), en particulier par l'intermédiaire de l'internet.

11. Registre de réseau (800, 203) pour enregistrer des dispositifs mobiles (120) auprès d'utilisateurs (140), le registre de réseau (800, 203) comprenant :
un registre (801), configuré pour stocker des informations de dispositif de tous les dispositifs de l'utilisateur liés à un accord avec un opérateur du registre de réseau (230) sur la base d'informations d'identification de dispositif (821, 823, 825) et d'informations d'identification d'utilisateur (841, 842), tous les dispositifs de l'utilisateur comprenant au moins deux dispositifs ;
un récepteur (803), configuré pour recevoir, d'une application (110), une demande (805, 205) d'informations de dispositif, la demande (805, 205) comprenant une référence unique de l'utilisateur (140) à l'accord avec l'opérateur du registre de réseau (800, 203) ;
un processeur (802), configuré pour extraire du registre (801) les informations de dispositif (822, 824, 826) de tous les dispositifs de l'utilisateur liés à l'accord avec l'opérateur du registre de réseau (230) qui est lié à la référence unique de l'utilisateur (140) ;
un émetteur (804), configuré pour transmettre (806, 207) à l'application (110) les informations de dispositif (822, 824, 826) de tous les dispositifs de l'utilisateur liés à l'accord avec l'opérateur du registre de réseau (230),
dans lequel l'émetteur (804) est en outre configuré pour fournir des informations concernant au moins deux dispositifs mobiles appariés à toutes les autres applications de l'utilisateur (140),
dans lequel le registre (801) est configuré pour stocker des informations concernant l'application requérante (110) afin d'informer toutes les applications appariées d'un nouveau dispositif de l'utilisateur (140).

12. Registre de réseau (800, 203) selon la revendication 11,
dans lequel le récepteur (803) est configuré pour recevoir (202) les informations de dispositif (822, 824, 826) de tous les dispositifs de l'utilisateur liés à l'accord avec l'opérateur du registre de réseau (230) en même temps que des informations d'identification (821, 823, 825) des dispositifs de l'utilisateur liés à l'accord avec l'opérateur du registre de réseau (230) ; et
dans lequel le processeur (802) est configuré pour enregistrer les informations de dispositif (822, 824, 826) de tous les dispositifs de l'utilisateur liés à l'accord avec l'opérateur du registre de réseau (230) dans le registre (801) du registre de réseau (800, 203) sur la base des informations d'identification (821, 823, 825) des dispositifs de l'utilisateur liés à l'accord avec l'opérateur du registre de réseau (230).

13. Registre de réseau (800, 203) selon la revendication 11 ou 12,
dans lequel le processeur (802) est configuré pour vérifier un niveau de confiance de l'application (110) avant de permettre à l'émetteur (804) de transmettre (806) à l'application (110) les informations de dispositif (822, 824, 826) de tous les dispositifs de l'utilisateur liés à l'accord avec l'opérateur du registre de réseau (230).

14. Système de communication (900), comprenant :
au moins deux dispositifs mobiles (120) ;
au moins une application (110) ou un service d'appariement avec au moins deux dispositifs mobiles (120), l'application (110) ou le service comprenant :
la réception (904, 204), par un utilisateur (140), d'une référence unique de l'utilisateur (140) à un accord avec un opérateur d'un registre de réseau (230, 800) ;
la transmission (805) d'une demande (205) d'informations de dispositif au registre de réseau (230, 800), la demande (205) d'informations de dispositif comprenant la référence unique de l'utilisateur ;
la réception (806), du registre de réseau (230, 800), d'une réponse (207) à la demande (205), dans lequel la réponse (207) comprend des informations de dispositif de tous les dispositifs de l'utilisateur liés à l'accord avec l'opérateur du registre de réseau (230), tous les dispositifs de l'utilisateur comprenant au moins deux dispositifs ;
l'appariement (908, 208) avec les au moins deux dispositifs mobiles (120) par l'utilisation des informations de dispositif de tous les dispositifs de l'utilisateur liés à l'accord avec l'opérateur du registre de réseau (230) ; et
la réception d'une notification du registre de réseau (230, 800) concernant un nouveau dispositif de l'utilisateur (140), dans lequel des informations concernant l'application requérante (110) sont stockées dans le registre de réseau (230, 800) afin d'informer toutes les applications appariées du nouveau dispositif de l'utilisateur (140) ; et
un registre de réseau (230, 800) selon l'une quelconque des revendications 11 à 13,
dans lequel ladite au moins une application (110) ou ledit au moins un service est configuré(e) pour effectuer un appariement avec les au moins deux dispositifs mobiles (120) sur la base d'une activation des au moins deux dispositifs mobiles (120) ou sur la base d'une activation de ladite au moins une application (110) ou dudit au moins un service.

15. Système de communication selon la revendication 14,
dans lequel l'appariement (908, 208) est mis en œuvre comme une fonction à l'intérieur de l'application ou du service.

16. Système de communication selon la revendication 14 ou 15,
dans lequel les informations de dispositif de tous les dispositifs de l'utilisateur liés à l'accord avec l'opérateur du registre de réseau (230) comprennent au moins un élément parmi les suivants : une identité internationale d'équipement mobile (IMEI), des capacités de dispositif, une adresse IP, un identifiant eUICC ID, des identifiants supplémentaires.
